# EUROPEAN PATENT APPLICATION

(11) **EP 3 859 226 A1**
(43) Date of publication of application: **04.08.2021**
(21) Application number: 20460009.2
(22) Date of filing: 30.01.2020
(51) Int. Cl.: F24F 12/00

(54) **THE DEVICE FOR HEAT RECOVERY FROM VENTILATION AIR**

(71) Applicant: Darco Spólka z Ograniczona Odpowiedzialnoscia, 39-200 Debica (PL)
(72) Inventor: Darlak, Józef, 39-200 Debica (PL); Gawle, Tomasz, 39-120 Sedziszów Malopolski (PL); Trytko, Mariusz, 39-200 Debica (PL)
(74) Representative: Warzybok, Tadeusz

(57) **Abstract**

The device for heat recovery from ventilation air equipped with a set of regenerators embedded in the wall of the building, each of regenerators has a heat accumulator and a fan driven by an electric motor of two-way operation, characterised in that, the device has a collector component (1) and a regenerator rack component (2) connected to the collector component, wherein the collector component (1) is equipped with two valve component cassettes (7, 7') tightly connected to each other by ends of tubular elements (18, 18') and a profiled casing (3) forming at least one suction chamber (29) and at least one discharge chamber (30), and each valve component cassette (7, 7') is equipped with at least one suction valve (23, 23') and at least one discharge valve (24, 24'), while each of the regenerators (42, 42') of the regenerator rack component (2) is equipped with a heat accumulator (43, 43').

## Description

The subject of the invention is a device for heat recovery from ventilation air intended for ventilation of a single premise - room, living room and for heat recovery from air removed from the premise, the regenerators set of the device is embedded in openings of the building of the premise.

Known from the Polish description of the utility model No. PL69310Y1, a ventilation device is designed especially for reversible inlet and exhaust systems with heat recovery, which can be used both in residential premises and in premises with special industrial purpose, the device consist of an external cap, a ventilation duct connecting the ventilated premise with an external environment, where a reversible fan with an electric motor is placed, a regenerator, filter and silencer, as well as an electronic control module, it is characterized by the fact that the ventilation duct consist of an internal casing connected to the duct, and the axial reversible fan and motor placed in the casing is located from the side of the external environment, and the regenerator is located from the side of the premise being ventilated, while in frontal planes of the internal casing, replaceable filters are embedded.

From the Polish description of the utility model No. PL70739, an exchanger for heat recovery from air in ventilation systems is also known, in the form of a ventilation duct module of the exhaust ventilation of the building, allowing for heat recovery from hot air flowing inside the duct. The exchanger consist of metal plates forming the ventilation duct, to which a pipeline assembly filled with a liquid medium for heat exchange is attached on the outside. In addition, the whole exchanger is thermally insulated on the outside with a material with a very low thermal conductivity coefficient, not higher than 0.1 W/mK. The duct formed by the plates has mounting flanges at both ends of the duct, allowing the exchanger to be installed in a known method in a ventilation line.

From the European Patent Application No. EP3222923A1, a ventilation system mounted in a flow channel is also known, the system is equipped with two heat exchangers and a two-way fan placed between the exchangers, wherein the flow direction between the first and the second heat exchanger is set and the exchangers have different lengths adapted to features and characteristics of the fan.

From the European Patent Description No. EP2325573B1, a device for ventilation of residential or commercial premises is known, the device has a mounting tube located in the wall of the building, in which a tubular casing with a fan and control device located in the tubular casing and two heat storage tanks are mounted, wherein the casing is rotatable mounted in the mounting tube and has a lower partial cover that forms the installation area and an upper semicylindrical partial cover that can be removed or deflected to form an access area.

From the German description of the utility model No. DE9301812U1, a ventilation system with a heat accumulator is known, in the system, as an assembly mounted between two interconnected side parts, there are numerous the accumulators shaped into a heat storage elements plate, which are arranged in series intervals with a variable air flow direction in the fan, characterized by the fact that inside the side parts there are pockets parallel to and opposite each other, forming sockets for the heat storage elements and the frame of the fan.

From the German patent No. DE 29904061, a device for room ventilation with a regenerative heat exchanger for heat recovery from exhaust air is known, in the device, a fan is placed on an inner wall of the building, through the fan air can be blown or sucked in through a duct cavity in the building wall. The essence of the device is that for necessary reversal of the airflow direction, fans are placed in a moving electromechanical frame so that the fans are placed next to each other but in the opposite direction of blowing and are alternately carried by an activation unit in the left/right mode before the heat exchanger.

From the patent description No. CN202660946, a metal heat exchanger consisting of a metal inlet pipe and a metal outlet pipe and a metal heat exchanger arranged in the shape of a creepy snake is known, wherein both the pipes are arranged vertically and parallel to each other and the metal heat exchanger is located between the metal inlet pipe and the metal outlet pipe, with two symmetrically placed supports on two sides of the exchanger both on the inlet and the outlet side.

From the patent description No. KR20140019524, a solution for a system forming an air passage in the wall of the building, the system is connected to a heat exchanger, so that in winter, when air coming from outside through the air passage reaches the heat exchanger, air is preheated in this passage, which prevents condensation due to the difference in temperature and humidity between the inside and outside of the building.

The inconvenience of solutions known so far is that the devices must occur in pairs, one of the devices injects air into the room and the other leads air out, wherein due to structure of the device and the nature of operation, air blown in by the device is soon extracted through the device and does not circulate through the whole premise, so the premise is not fully ventilated. The devices are often installed on two opposite walls of the building, which means that during the wind there is no heat recovery because the overpressure on the windward side of the building, caused by the wind, is often higher than the counterpressure generated by the fan in the device. The devices may also be incorrectly fixed too close to each other, i.e. not in accordance with the applicable regulations requiring a distance of at least 1.5 m between air intakes of the devices.

The purpose of the invention is to provide a new, simple and compact construction of a universal device for heat recovery from air exhausted from a building premise, enabling installation of the device on a single wall of the premise, eliminating inconveniences known from the state of the art and devices used so far and at the same time ensuring compliance of the device with legal standards in force in this area. The purpose of the invention is also to provide the design of a device for heat recovery which will ensure the supply of purified air to one part of the premise, for example service or residential, and removal of air from the other part of the premise. The further purpose of the invention is to provide this device on the basis of known and generally available regenerators, which will simplify the assembly of the device and at the same time will reduce manufacturing costs of the device.

The device for heat recovery from ventilation air according to the invention is characterized by the fact that the device has a collector component and a regenerator rack component connected to the collector component, wherein the collector component is equipped with two valve component cassettes connected tightly to each other by ends of tube elements and a profiled casing forming at least one suction chamber and at least one discharge chamber, and each valve component cassette is equipped with at least one suction valve and at least one discharge valve, while each of the regenerators of the regenerator rack component is equipped with a heat accumulator.

It is preferable when valve component cassettes consist of profile bodies hinged to covers and valve components with suction and discharge channels placed inside cassettes, and air filters are embedded in external faces of cassettes.

It is also preferable when non-return valves are used as suction valves.

It is also preferable when non-return valves are used as discharge valves.

The construction of the device for heat recovery from ventilation air according to the invention made it possible to install the device on the single wall of the premise, wherein the coupling of two cooperating regenerators by means of two chambers with unidirectional air flow regulated by valves working alternately gave the effect of forcing constant air circulation in the ventilated premise, thanks to which the alternating operation of the regenerators does not cause a change in the direction of air flow in the premise, thus influencing better quality of inhaled air. Moreover, forcing the constant air circulation, using the device, in the ventilated premise enabled over 95% heat recovery from ventilation air. An additional advantage of the design of the device according to the invention is that the device performs its functions regardless of the position of the device. Proper placement of regenerators in the structure forces the installation ensuring the distance between air intakes in accordance with the applicable law and forces the installation on one wall of the building, which causes that during the wind both air intakes will be in the same pressure zone occurring outside the building, e.g. on the windward side, so the pressure difference between both air intakes is close to 0 Pa, i.e. the wind will not affect the operation of the device.

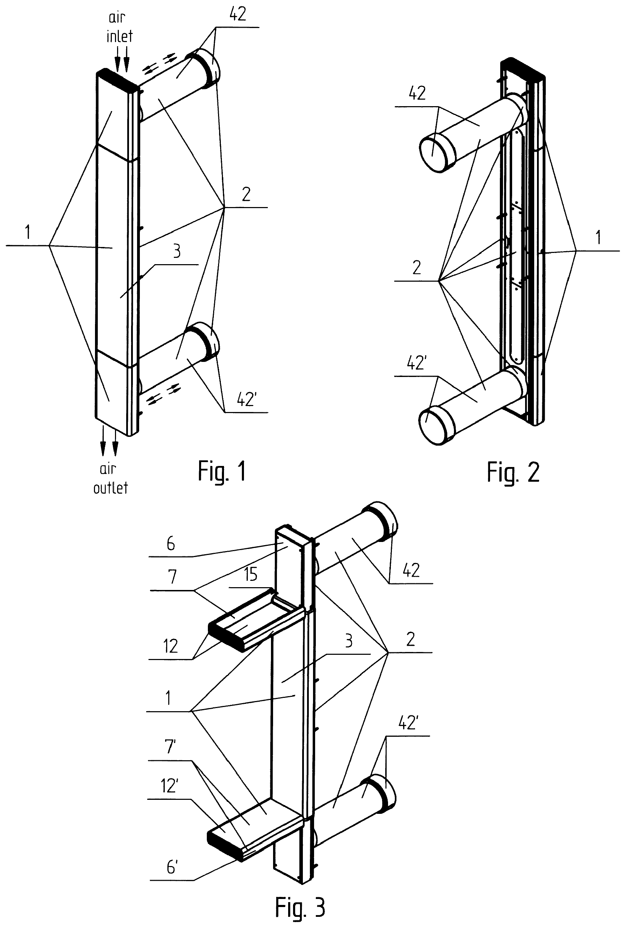

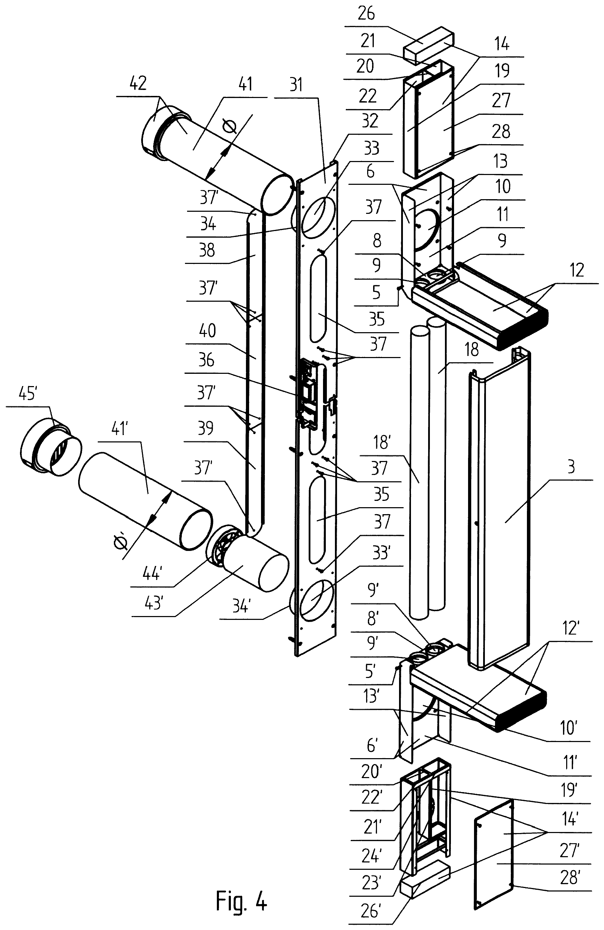

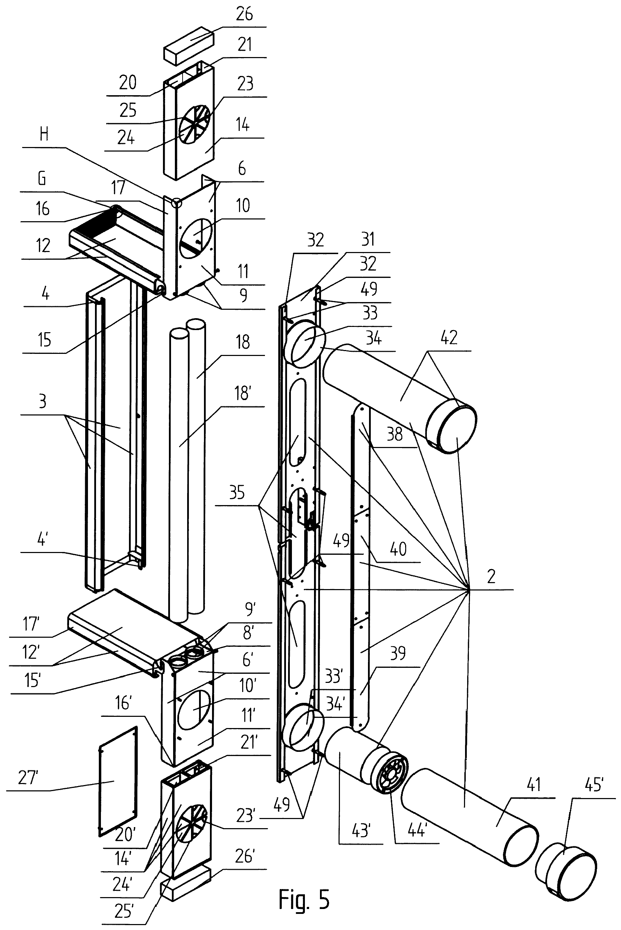

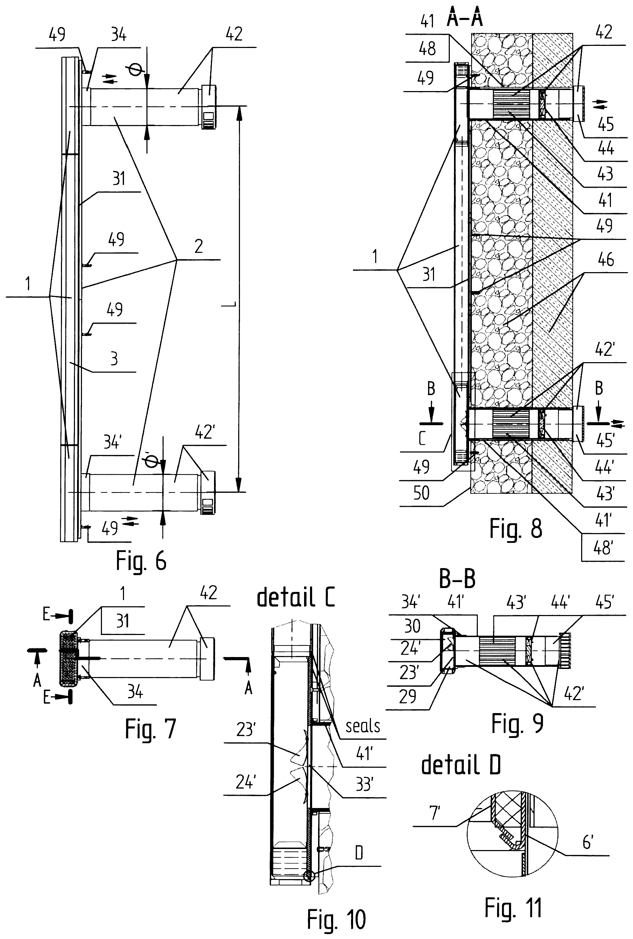

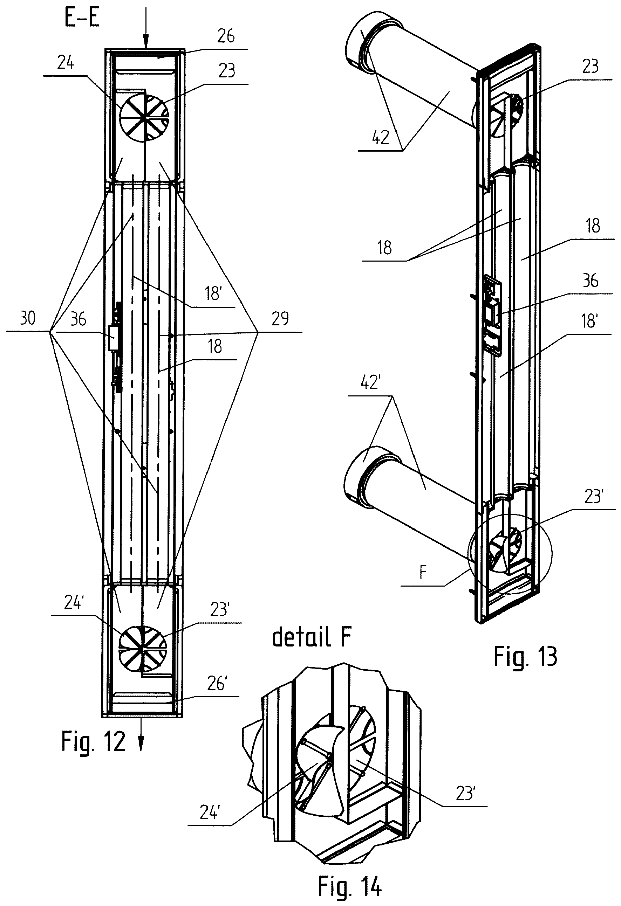

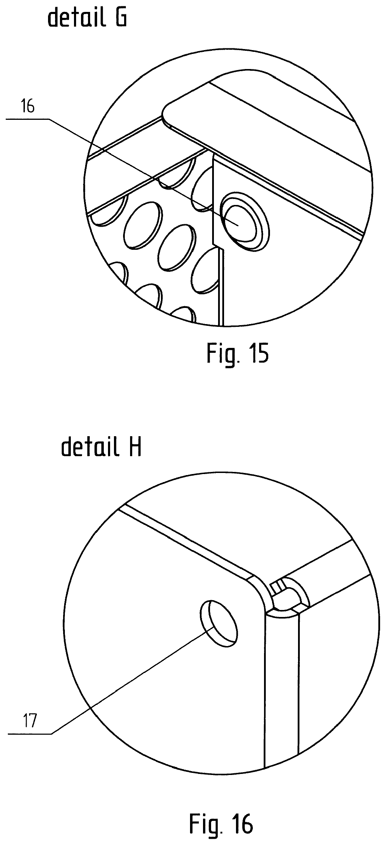

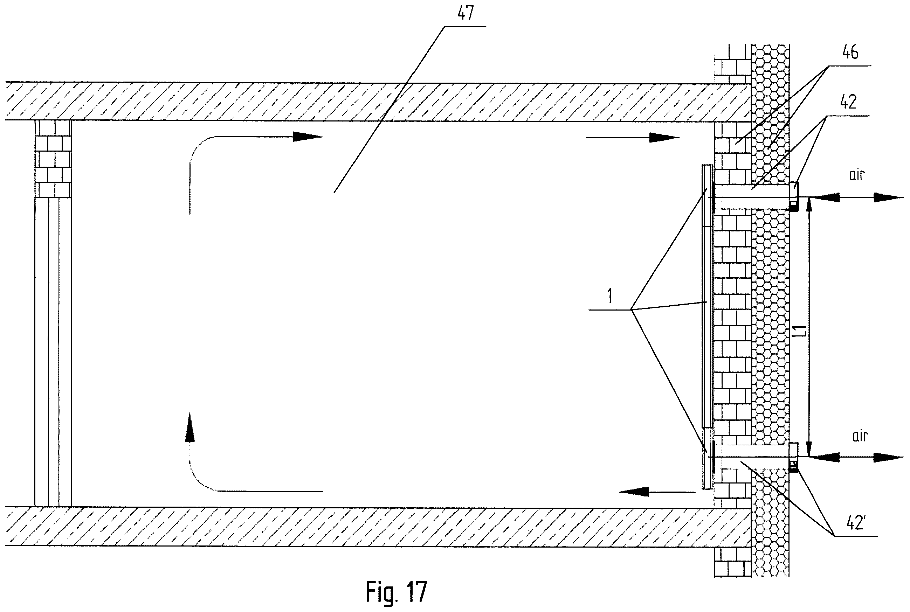

The subject of the invention is shown in the embodiment of the invention in Fig. 1 - Fig. 17, where Fig. 1 shows the perspective view illustrating the device for heat recovery from ventilation air, seen from the side of collector of the device with both end covers of the device closed, Fig. 2 shows the perspective view illustrating the same device, but seen from the side of the rack of the device and both regenerators of the device, Fig. 3 shows the device from Fig. 1, but with both covers of the collector of the device open, Fig. 4 shows the perspective view of the same device in the condition of decomposition of components of the device, from the side of the collector of the device, Fig. 5 shows the same device in the condition of decomposition of components of the device from the side of regenerators of the device, Fig. 6 shows the side view illustrating the same device, Fig. 7 shows the top view illustrating the same device, Fig. 8 shows the same device in the condition of installation of the device in the wall of the residential building premise, in the vertical cross-section along the A-A line, Fig. 9 shows the device illustrated in Fig. 8 but in the horizontal cross-section along the B-B line, Fig. 10 shows the enlarged "C" detail of the device in the vertical cross-section along the A-A line, Fig. 11 shows the enlarged "D" detail of the device in the vertical cross-section, Fig. 12 shows the same device in the vertical cross-section along the E-E line in Fig. 7, Fig. 13 shows the perspective view illustrating the same device, but in the cross-section of tube elements of discharge and suction chamber of the device, Fig. 14 shows the enlarged "F" detail of one of the chambers equipped with the suction and discharge valve, Fig. 15 shows the enlarged "G" detail of the corner of the collector cover of the device, Fig. 16 shows the enlarged "H" detail of one corner of the cassette body of the device, and Fig. 17 shows the example of installation of the device according to the invention in the wall and inside the residential premise of the building, showing the ventilation air circulation using arrows in the vertical cross-section of the premise.

The device for heat recovery from ventilation air consists of a collector component 1 and a rack component 2 of two regenerators separably connected to the collector component, wherein the collector component 1 has a U-profile casing 3, both ends of the casing are connected, with grips 4, 4' and screws 5, 5', to the body 6, 6' of identical valve component cassettes 7, 7', the cassettes are a two-sided extension of the casing 3 of the collector component 1. Each of the valve component cassettes 7, 7' has the U-profile body 6, 6' with one front wall 8, 8', with two circular through openings 9, 9' next to each other placed in cassettes and with single openings 10, 10' of air intakes made in wider walls 11, 11' of the bodies, whose front walls 8, 8' are adjacent to open ends of the profiled casing 3 of the collector 1, both bodies 6, 6' are covered by covers 12, 12' with the same U-profiles covering side walls 13, 13' of these bodies, forming inside them prismatic recesses in which valve components 14, 14' are placed and, in addition, one ends of the side walls 13, 13' of bodies 6, 6' on the side of their front walls 8, 8' are rotary connected to one ends of covers 12, 12' covers by hinges 15, 15' and their other ends are connected to each other by ball latches 16, 16' of the covers embedded in ball sockets 17, 17' made in the bodies. In addition, inside the casing 3 there are two circular tubes 18, 18', ends of the tubes are embedded in openings 9, 9' of front walls 8, 8' of bodies 6, 6' and are situated opposite to channels 21, 22 and 21', 22' of valve components 14, 14'. In turn, both valve components 14, 14' placed in cavities formed by bodies 6, 6' bodies and their covers 12, 12' are prismatic bodies 19, 19' hollow inside with partitions 20, 20' situated transversely in the middle of their width, forming two suction channels 21, 21' and two discharge channels 22, 22'. Suction valves 23, 23' are attached to one surface of the partitions, and discharge valves 24, 24' are attached to the other surface of the partitions, and opposite to the valves, circular through openings 25, 25' are made in front walls 7, 7' of valve components, whereas air filters 26, 26' are mounted in one external faces of the valve components, both of the valve components 7, 7' have rear detachable walls which are rectangular covers 27, 27' connected to the bodies of the valve components by screws 28, 28'. Pipe ends 18, 18' embedded in openings 9, 9' of front walls 8, 8' and opposite to channels 21, 22 and 21', 22' of valve components 14, 14', located opposite suction valves 23, 23' form the suction chamber 29 and opposite discharge valves 24, 24' form the discharge chamber 30.

In turn, the rack component 2 of two regenerators of the device, as shown in the drawing, especially in Fig. 4 and Fig.5 consists of the cassette body 31 having the shape of a rectangular stripe, both longer sides of the cassette body have angle bends 32, and on both ends of the cassette body there are circular through openings 33, 33' with sleeves 34, 34' seated inseparably in openings and protruding outwards, the openings are situated opposite the similar circular openings 10, 10' made in both bodies 6, 6' of valve component cassettes 7, 7', and between the openings 33, 33', the body of the cassette has three rectangular openings 35 with rounded shorter sides, and next to the central opening 35 the controller 36 is attached to the body, and in addition to the body cable trays 38, 39 are attached by means of screws 37 through mounting openings 37' and the connecting tray 40 is located between the cable trays so that they obscure openings 35. In addition, one ends of bushing casings 41, 41' of regenerators 42, 42' are embedded in both sleeves 34, 34' of the cassette body 31, inside of which, on the side of suction valves 23, 23' and discharge valves 24, 24', heat accumulators 43, 43' are embedded, followed by fans 44, 44' and air intakes 45, 45'.

The principle of installation in a ventilated premise and operation of the device for heat recovery from ventilation air is, that, after making previously two through openings 48, 48' in the wall 46 of ventilated premise (room) 47 of the building with a diameter corresponding to the diameters Ø, Ø' of bushing casings 41, 41' of regenerators 42, 42' and in a distance of L1 corresponding to the "L" distance of the symmetry axis of the regenerators situated in relation to each other, embedded with one ends in sleeves 34, 34' seated in openings 33, 33' of the cassette body 31, and both of these regenerators are embedded in wall openings 48, 48' and air intakes 45, 45' are fitted in external ends of the regenerators, the body of their cassettes is attached to the internal surface 50 of the wall of the premise with screws 49, hereupon the body of the cassette is connected to the collector component 1 of the device. Then, after connecting the controller 36, connected to cables placed in cable trays 38, 39 of he collector component 1, to the electrical network of the building with the ventilated premise 47, impellers of both fans 44, 44' are put into rotary motion and their operation is controlled. As a result of operation of the fans, air from the interior of the premise (room) 47 gets through the air filter 26 to the interior of collector component 1, from where, through the suction chamber 29 of the channel, air is fed to the regenerator 42, through which air gets outside the building, and at the same time, through the second regenerator 42' and the discharge chamber 30, air gets inside the ventilated premise 47. The flow of the air is regulated by a pair of fans 44, 44' of both regenerators 42, 42', from which the regenerator 42 leads air out of the ventilated premise 47, and regenerator 2' draws air into the premise, while suction valves 23, 23' make it impossible for air in the collector component 1 to move back from outside the building to the collector component 1, and pressure valves 24, 24' make it impossible for air in the collector component 1 to move back to outside the building.

During operation of the device, warm air leaving the ventilated premise 47 heats the heat accumulator 43 placed in the cylindrical casing 41 of the regenerator 42, while air entering through the regenerator 42' is heated by heat accumulator 43' of the regenerator. After a certain time, when the heat accumulator 43' of air is cooled and the heat accumulator 43 is heated, the operation of the regenerators 42, 42' is changed by changing the direction of operation of both fans 44, 44' of regenerators, as a result of which air from the premise 47 is led out of the building through the opposite filter 26, from where, using the suction chamber 29 through the opening 10' into the regenerator 42', and air passing through the regenerator 42 is pumped into the premise through the discharge chamber 30 and filter 26. After further temperature change due to appropriate heating or cooling of heat accumulators 43, 43', the operation cycle is reversed again and the described sequence is repeated.

In the second embodiment according to the invention not shown in the drawing, two circular pipes 18 18' are mounted inside casing 3, ends of the pipes are placed in two openings 9 and two openings 9' to obtain two suction chambers 29 and two discharge chambers 30, and in addition, both valve components 14, 14' are equipped with two suction valves 23, 23' each and two discharge valves 24, 24' each, obtaining greater efficiency of heat recovery from ventilation air of the ventilated premise. In the further embodiment according to the invention, also not shown in the drawing, non-return valves are used as suction valves 23, 23' and discharge valves 24, 24'.

It is also obvious that the device according to the invention can be installed in the wall of the building in any position, as gravity does not affect the correct operation of valves of the device.

## Claims

1. The device for heat recovery from ventilation air equipped with a set of regenerators embedded in the wall of the building, each of regenerators has a heat accumulator and a fan driven by an electric motor of two-way operation, **characterised in that**, the device has a collector component (1) and a regenerator rack component (2) connected to the collector component, wherein the collector component (1) is equipped with two valve component cassettes (7, 7') tightly connected to each other by ends of tubular elements (18, 18') and a profiled casing (3) forming at least one suction chamber (29) and at least one discharge chamber (30), and each valve component cassette (7, 7') is equipped with at least one suction valve (23, 23') and at least one discharge valve (24, 24'), while each of the regenerators (42, 42') of the regenerator rack component (2) is equipped with a heat accumulator (43, 43').

2. The device according to the claim 1, **characterised in that**, that valve component cassettes (7, 7') consist of profiled bodies (6, 6') hinged with covers (12) and valve components (14, 14') with suction channels (21, 21') and discharge channels (22, 22') placed inside the covers, with air filters (26, 26,) embedded in external faces of the covers.

3. The device according to the claim 1, **characterised in that**, non-return valves are used as suction valves (23, 23').

4. The device according to the claim 1, **characterised in that**, non-return valves are used as discharge valves (24, 24').
